# EUROPEAN PATENT APPLICATION

(11) **EP 4 668 761 A1**
(43) Date of publication of application: **24.12.2025**
(21) Application number: 24755984.2
(22) Date of filing: 30.01.2024
(51) Int. Cl.: H04N 21/442, H04N 21/466, H04N 21/431

(54) **MULTIMEDIA CONTENT PROCESSING METHOD AND APPARATUS, DEVICE, AND STORAGE MEDIUM**

(30) Priority: 14.02.2023 CN 202310159822
(71) Applicant: Beijing Zitiao Network Technology Co., Ltd., Beijing 100190 (CN)
(72) Inventor: XU, Jiaqi, Beijing 100028 (CN); WANG, Tingting, Beijing 100028 (CN); LI, Peifeng, Beijing 100028 (CN); TANG, Bo, Beijing 100028 (CN); TANG, Yuxi, Beijing 100028 (CN); SHI, Yongbiao, Beijing 100028 (CN); DUAN, Yunshan, Beijing 100028 (CN); LIU, Fujia, Beijing 100028 (CN)
(74) Representative: Grünecker Patent- und Rechtsanwälte PartG mbB
(86) International application number: PCT/CN2024/074808
(87) International publication number: WO 2024/169610

(57) **Abstract**

The present disclosure provides a method, an apparatus, a device, and a storage medium for processing multimedia content. The method includes: in response to a predetermined trigger operation acting on a presentation page of first multimedia content, recognizing at least one target resource object carried in the first multimedia content, where there is predetermined correspondence between the target resource object and a recommended object type; then, determining, based on the predetermined correspondence, a recommended object type corresponding to a first target resource object in the at least one target resource object, and determining at least one recommended object based on the first target resource object; then, presenting the at least one recommended object. According to the embodiments of the present disclosure, in presenting a multimedia content, a recommended object related to the target resource object can be presented to a user based on a target resource object carried in the multimedia content, and an extended consumption path for content carried in the multimedia content is provided to the user, thereby improving the user experience.

## Description

This application claims priority to Chinese Patent Application No. 2023101598223, filed with the Chinese Patent Office on February 14, 2023 and entitled "METHOD, APPARATUS, DEVICE, AND STORAGE MEDIUM FOR PROCESSING MULTIMEDIA CONTENT", which is incorporated herein by reference in its entirety.

### FIELD

The present disclosure relates to the field of data processing, and in particular, to a method, apparatus and device, and a storage medium for processing multimedia content.

### BACKGROUND

With continuous development of video processing technology, people have more and more diversified requirements for video-related functions. Therefore, how to enrich video-related functions to satisfy more requirements of users so as to improve user experience is a technical problem to be solved urgently at present.

### SUMMARY

In order to solve the described technical problem, the present disclosure provides a method, apparatus and device, and a storage medium for processing multimedia content, which can enrich video-based interaction functions and improve user experience.

According to a first aspect, the present disclosure provides a method for processing multimedia content. The method includes: in response to a predetermined trigger operation acting on a presentation page of first multimedia content, recognizing at least one target resource object carried in the first multimedia content, where there is predetermined correspondence between the target resource object and a recommended object type; determining, based on the predetermined correspondence, a recommended object type corresponding to a first target resource object in the at least one target resource object; determining at least one recommended object based on the first target resource object, where the at least one recommended object is of the recommended object type corresponding to the first target resource object; and presenting the at least one recommended object.

In an optional embodiment, the at least one target resource object further includes a second target resource object, and presenting the at least one recommended object includes: according to the recommended object type, categorizing and presenting recommended objects determined respectively based on the first target resource object and the second resource object.

In an optional embodiment, according to the recommended object type, categorizing and presenting the recommended objects determined respectively based on the first target resource object and the second resource object includes: presenting at least one first recommended object determined based on the first target resource object on a first card, where the first recommended object is of the recommended object type corresponding to the first target resource object; and presenting at least one second recommended object determined based on the second resource object on a second card, where the second recommended object is of a recommended object type corresponding to the second target resource object, and the first card and the second card belong to a card set presented in a stack style.

In an optional embodiment, the method further includes: in response to a predetermined sliding operation triggered for the card set, presenting respective cards in the card set in a scrolling manner.

In an optional embodiment, the method further includes: in response to a predetermined trigger operation for a target card in the card set, presenting, on a recommended object presentation page, a recommended object on the target card; and receiving a predetermined interaction operation for a target recommended object on the recommended object presentation page.

In an optional embodiment, the at least one target resource object includes an item object, and a recommended object type corresponding to the item object includes an item type, and determining the at least one recommended object based on the first target resource object includes: determining at least one recommended item with the same or similar feature as the item object, where the recommended item is of the item type.

In an optional embodiment, the at least one target resource object includes background music, and a recommended object type corresponding to the background music includes a music type, and determining the at least one recommended object based on the first target resource object includes: performing music recognition on the background music to obtain a music recognition result; and determining a song resource corresponding to the background music based on the music recognition result, where the song resource is of the music type.

In an optional embodiment, the at least one target resource object includes address information, and a recommended object type corresponding to the address information includes a life service type, and determining the at least one recommended object based on the first target resource object includes: determining at least one life service object within a predetermined distance range by taking the address information as a center, where the life service object is of the life service type.

In an optional embodiment, the at least one target resource object includes a target human face displayed on a video frame, and recommended object type corresponding to the target human face includes a user account type, and determining the at least one recommended object based on the first target resource object includes: determining, based on the target human face displayed on the video frame, at least one user account with a user avatar having a similarity with the target human face reaching a predetermined threshold, where the user account is of the user account type.

In an optional embodiment, recognizing the at least one target resource object carried in the first multimedia content in response to the predetermined trigger operation acting on the presentation page of the first multimedia content includes: in response to the predetermined trigger operation acting on a presentation page of the first multimedia content, presenting a plurality of key video frames in the first multimedia content on a video recognition page in a form of transition dynamic effect; and recognizing the at least one target resource object carried in the first multimedia content based on the plurality of key video frames.

According to a second aspect, the present disclosure provides an apparatus for processing multimedia content. The apparatus includes: a recognizing module configured to recognize, in response to a predetermined trigger operation acting on a presentation page of first multimedia content, at least one target resource object carried in the first multimedia content, where there is a predetermined correlation between the target resource object and a recommended object type; a first determining module configured to determine, based on the predetermined correspondence, a recommended object type corresponding to a first target resource object in the at least one target resource object; a second determining module configured to determine at least one recommended object based on the first target resource object, where the at least one recommended object is of the recommended object type corresponding to the first target resource object; and a presenting module configured to present the at least one recommended object.

According to a third aspect, the present disclosure provides a computer readable storage medium. The computer readable storage medium stores instructions therein, and when running on a terminal device, the instructions cause the terminal device to implement the foregoing method.

In a fourth aspect, the present disclosure provides a device for processing multimedia content, including: a memory, a processor, and a computer program stored in the memory and being executable on the processor, and when the processor executing the computer program, the processor implements the foregoing method.

In a fifth aspect, the present disclosure provides a computer program product. The computer program product includes a computer program/instruction. When the computer program/the instruction is executed by a processor, the foregoing method is implemented.

Compared with the prior art, the technical solution provided in the embodiments of the present disclosure has at least the following advantages:

According to the method for processing multimedia content, in response to a predetermined trigger operation acting on a presentation page of first multimedia content, at least one target resource object carried in the first multimedia content is recognized, where there is predetermined correspondence between the target resource object and a recommended object type; then, a recommended object type corresponding to a first target resource object in the at least one target resource object is determined based on the predetermined correspondence; at least one recommended object is determined based on the first target resource object; then the at least one recommended object is presented. In the embodiments of the present disclosure, during the process of presenting the multimedia content, a recommended object related to a target resource object may be presented to a user based on the target resource object carried in the multimedia content. It can be seen that the embodiments of the present disclosure provide a user with an extended consumption path for content carried in the multimedia content, thereby improving the user experience.

### BRIEF DESCRIPTION OF THE DRAWINGS

The accompanying drawings are incorporated the description and form a part of the description, illustrate embodiments consistent with the present disclosure and together with the description, serve to explain the principles of the disclosure.

To describe the technical solutions in the embodiments of the present disclosure or in the prior art more clearly, the following briefly introduces the accompanying drawings required for describing the embodiments or the prior art. Apparently, a person of ordinary skill in the art may still derive other drawings from these accompanying drawings without creative efforts.
FIG. 1 is a flowchart of a method for processing multimedia content according to embodiments of the present disclosure;
FIG. 2 is a schematic diagram of a video recognition page according to embodiments of the present disclosure;
FIG. 3 is a schematic diagram of another video recognition page according to embodiments of the present disclosure;
FIG. 4 is a schematic diagram of a presentation page corresponding to a card set according to embodiments of the present disclosure;
FIG. 5 is a schematic diagram of a recommended object presentation page according to embodiments of the present disclosure;
FIG. 6 is a flowchart of another method for processing multimedia content according to embodiments of the present disclosure;
FIG. 7 is a schematic diagram of another recommended object presentation page according to embodiments of the present disclosure;
FIG. 8 is a schematic diagram of another recommended object presentation page according to embodiments of the present disclosure;
FIG. 9 is a structural schematic diagram of an apparatus for processing multimedia content according to embodiments of the present disclosure;
FIG. 10 is a structural schematic diagram of a device for processing multimedia content according to embodiments of the present disclosure.

### DETAILED DESCRIPTION

**In** order to understand the described objects, features and advantages of the present disclosure more clearly, the solutions of the present disclosure will be further described below. It should be noted that the embodiments of the present disclosure and the features in the embodiments can be combined with each other without conflict.

In the following description, numerous specific details are set forth in order to provide a thorough understanding of the disclosure, but the disclosure may also be implemented by ways other than those as described herein. Apparently, the embodiments in the description are only a part rather than all of the embodiments of the present disclosure.

With the continuous development of video processing technologies, people have more and more diversified requirements for video-related functions. Therefore, how to enrich video-related functions to satisfy more requirements of users so as to improve user experience is a technical problem to be solved urgently at present.

In addition, the related information carried in the video becomes also more and more abundant, such as items appearing in the video, places mentioned, people appearing in the video, background music used, and so on. In the process of a user watching a video, a further consumption request may be generated for the related information carried in the video.

In the related art, by using a method of adding a function anchor on a video playback page, a path for further consuming related information carried in a video is provided to a user. However, the presentation area of the video playback page is limited, and too many presentation function anchor points may affect the simplicity of the video playback page and thus affect video viewing experience of the user.

To this end, the present disclosure provides a method for processing multimedia content. First, in response to a predetermined trigger operation acting on a presentation page of first multimedia content, at least one target resource object carried in the first multimedia content is recognized. In some embodiments, there is predetermined correspondence between the target resource object and a recommended object type. Then, a recommended object type corresponding to a first target resource object in the at least one target resource object is determined based on the predetermined correspondence, and at least one recommended object is determined based on the first target resource object. In addition, the at least one recommended object is presented. In the embodiments of the present disclosure, during a process of presenting the multimedia content, a recommended object related to a target resource object may be presented to a user based on the target resource object carried in the multimedia content. It can be seen that the embodiments of the present disclosure provide a user with an extended consumption path for content carried in the multimedia content, thereby improving the user experience.

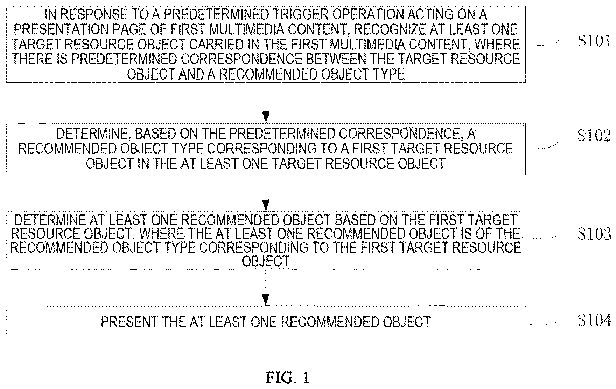

Based on this, the embodiments of the present disclosure provide a method for processing multimedia content. FIG. 1 is a flowchart of a method for processing multimedia content according to embodiments of the present disclosure. The method includes:

At S101, in response to a predetermined trigger operation acting on a presentation page of first multimedia content, at least one target resource object carried in the first multimedia content is recognized.

In some embodiments, there is predetermined correspondence between the target resource object and a recommended object type.

In some embodiments, the first multimedia content may include any one of video, audio, graphic and textual content, text content, and picture content. Specifically, the first multimedia content may be any piece of multimedia content in any one of multimedia information streams, for example, any one of recommended videos in the recommended video streams.

In some embodiments, the predetermined trigger operation acting on the presentation page of the first multimedia content may include a knuckle double-click operation, a long-press operation, and a double-click operation acting on the presentation page of the first multimedia content, which is not limited in the embodiments of the present disclosure.

In some embodiments, the target resource object may be an item object presented on a video frame carried in the first multimedia content, for example, a hoody, a stool, a pet dog, etc., and may also be address information appearing in text content (e.g., a subtitle) or a location anchor (e.g., a certain tourist attraction, a food court, a supermarket, etc.) carried in the first multimedia content, or background music played in the first multimedia content, or a public figure appearing in a video frame carried in the first multimedia content.

In some embodiments, upon receiving a predetermined trigger operation acting on a presentation page of the first multimedia content, at least one target resource object carried in the first multimedia content may be recognized. For example, the first multimedia content may be recognized by using an optical character recognition technology (OCR, for short), an automatic speech recognition technology (ASR, for short), a face recognition technology, etc., and a target resource object carried in the first multimedia content is obtained. The specific recognition method is described in the following embodiments for different target resource objects, and is not described herein.

In some embodiments, the recommended object type is configured to identify a type to which the recommended object determined based on the target resource object belongs. In some embodiments, the recommended object type may include an item type, a music type, a life service type, a user account type, and the like; the embodiments of the present disclosure are not limited thereto, and it may be specifically set based on actual requirements.

In some embodiments, there is a predetermined correspondence between the target resource object and a recommended object type, and different target resource objects may correspond to the same or different recommended object types. For example, if the target resource object is a certain hoody, the corresponding recommended object type may be an item type; if the target resource object is a segment of music, the corresponding recommended object type may be a music type.

In a practical application, it is assumed that the first multimedia content includes a video. In order to improve multimedia content viewing experience of a user, in a case that the user may have an expectation on a function of determining a corresponding recommended object based on the target resource object carried in the first multimedia content, a plurality of key video frames in the first multimedia content may be presented on a video recognition page in a form of transition dynamic effect when receiving the predetermined trigger operation acted on the presentation page of the first multimedia content, and then, at least one target resource object carried in the first multimedia content is recognized based on the plurality of key video frames.

In an optional implementation, the key video frames in the first multimedia content may be captured in accordance with a predetermined frame interval. For example, the capturing of video frames is performed on the first multimedia content at an interval of ten frames, so as to obtain a plurality of key video frames.

In a further optional implementation, the key video frames in the first multimedia content may also be captured at a predetermined time interval, for example, capture of video frame is performed on the first multimedia content at an interval of 1 second, so as to obtain a plurality of key video frames.

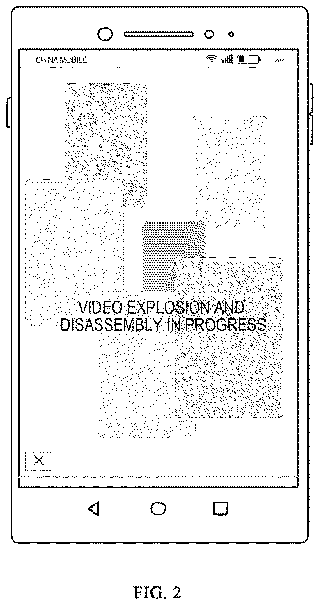

FIG. 2 is a schematic diagram of a video recognition page provided by embodiments of the present disclosure, where a plurality of key video frames are displayed on the video recognition page according to a predetermined motion trajectory or a random running trajectory. In some embodiments, the predetermined motion trajectory may include a trajectory moving from a center position to an edge position of the video recognition page, and the like.

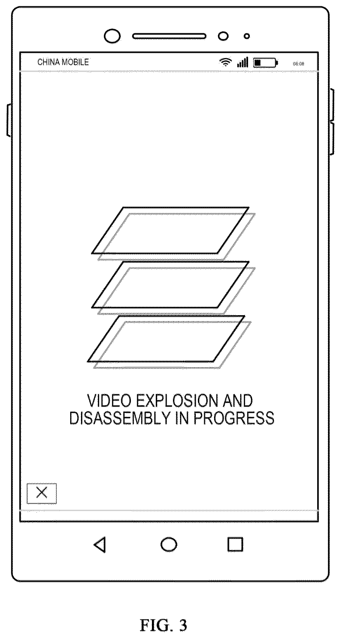

In an optional implementation, a plurality of key video frame images in the first multimedia content may be presented on different cards on the video recognition page based on the style of cards presented in a stack style, and then, based on a plurality of key video frames, at least one target resource object carried in the first multimedia content is recognized. FIG. 3 is a schematic diagram of another video recognition page according to embodiments of the present disclosure. In some embodiments, a plurality of key video frames are presented on cards on the video recognition page in a stack style.

At S102, a recommended object type corresponding to a first target resource object in the at least one target resource object is determined based on the predetermined correspondence.

At S103, at least one recommended object is determined based on the first target resource object.

In some embodiments, the at least one recommended object is of a recommended object type corresponding to the first target resource object.

In some embodiments, the first target resource object may be any one of the at least one target resource object recognized from the first multimedia content.

In some embodiments, after the at least one target resource object carried in the first multimedia content is recognized, at least one recommended object of a recommended object type corresponding to the target resource object may be determined based on any target resource object among the at least one target resource object.

In some embodiments, the first target resource object and the at least one recommended object have the same or similar features. For example, assuming that the first target resource object is a chorus segment of a certain song, based on the chorus segment and a corresponding recommended object type (i.e., a music type), the whole song corresponding to the chorus segment may be determined as the recommended object corresponding to the first target resource object.

At S104, the at least one recommended object is presented.

In some embodiments, after at least one recommended object is determined based on the target resource object, each recommended object is presented.

In an optional implementation, at least one target resource object may further include a second target resource object. In some embodiments, the second target resource object and the first target resource object respectively are of different recommended object types.

Therefore, presenting the recommended objects further includes: after determining at least one recommended object respectively based on the first target resource object and the second target resource object, categorizing and presenting each recommended object according to the recommended object type to which each recommended object belongs.

For example, it is assumed that the first target resource object is a white hoody, which corresponds to an item type, and the second target resource object is a chorus segment, which corresponds to a music type. Then, the recommended objects determined based on the white hoody include a white long-sleeved hoody and a white short-sleeved hoody. The recommended object determined based on the music segment A is a complete song B. Then, according to the recommended object types, a white long-sleeved hoody, a white short-sleeved hoody, and the music B are categorized and presented, i.e., the white long-sleeved hoody and the white short-sleeved hoody are categorized and presented as recommended objects of the item type, and the music B is presented as the recommended object of the music type.

It should be noted that, the foregoing is described by taking the at least one target resource object including only two target resource objects as an example. The embodiments of the present disclosure does not limit the number of target resource objects recognized from the first multimedia content. For the manner of presenting recommended objects respectively corresponding to the plurality of target resource objects, reference may be made to the above-mentioned manners, and details are not repeatedly described herein.

In the method for processing multimedia content provided in the embodiments of the present disclosure, first, in response to a predetermined trigger operation acting on a presentation page of first multimedia content, at least one target resource object carried in the first multimedia content is recognized, and there is predetermined correspondence between the target resource object and a recommended object type. Then, based on the predetermined correspondence, a recommended object type corresponding to the first target resource object among the at least one target resource object is determined, and at least one recommended object is determined based on the first target resource object. In addition, the at least one recommended object is presented. In the embodiments of the present disclosure, during the process of presenting multimedia content, a recommended object related to a target resource object may be presented to a user based on the target resource object carried in the multimedia content. It can be seen that the embodiments of the present disclosure provide a user with an extended consumption path for content carried in the multimedia content, thereby improving the user experience.

In practical applications, in order to enrich interaction functions in the process of presenting multimedia content and improve multimedia content viewing experience of a user, recommended objects of different recommended object types may also be presented respectively in the form of cards. Specifically, the recommended objects, which are determined respectively based on the first target resource object and the second target resource object, may be categorized and presented in a card style. The first target resource object and the second target resource object correspond to different recommended object types, respectively.

Specifically, at least one first recommended object determined based on the first target resource object is presented on the first card, and the first recommended object is of the recommended object type corresponding to the first target resource object. At least one second recommended object determined based on the second resource object is presented on a second card, and the second recommended object is of a recommended object type corresponding to the second target resource object.

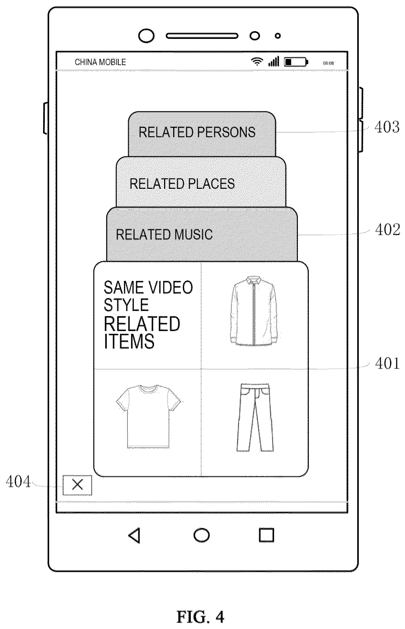

FIG. 4 is a schematic diagram of a presentation page corresponding to a card set according to embodiments of the present disclosure. Taking two cards as an example, a recommended object determined based on a white jacket (a first target resource object), such as a white long-sleeved jacket or a white short-sleeved jacket, is presented on a first card 401, and a recommended object determined based on a music segment A (a second target resource object), such as music B, is presented on a second card 402. In some embodiments, the first card and the second card belong to a card set presented in a stack style.

In an optional implementation, in presenting a card set in a stack style on a presentation page corresponding to the card set, respective cards in the card set may also be presented in a scrolling manner through a predetermined sliding operation triggered for the card set, so that a user may select a required card for presentation based on content presented on each card.

In some embodiments, the predetermined sliding operation triggered for the card set may include an upward sliding operation and a downward sliding operation for the card set, so as to trigger scrolling and presentation of respective cards in the card set.

As shown in FIG. 4, when an upward sliding operation for a card set is received, a currently presented card 401 is switched upward to a next adjacent card, that is, a card 402, so that each recommended object in the card 402 is presented on a presentation page where the card set is located. When receiving a downward sliding operation for the card set, the currently presented card 401 is switched downward to an adjacent previous card, that is, the card 403, so as to be presented completely on the presentation page where the card set is located.

In an optional implementation, if the user wants to exit the presentation for the card set, the user may return to the playback page of the first multimedia content through a predetermined return operation for the card set. In some embodiments, the predetermined return operation for the card set may include a leftward sliding operation or the like acting on the card set. In addition, a return control 404 may also be provided on a presentation page where the card set is located, and the presentation page of the first multimedia content is returned by clicking the return control.

In a practical application, because the number of cards in the card set is a finite number, when a predetermined sliding operation triggered for the card set is received, respective cards in the card set may be presented in a cyclic scrolling manner.

In an optional implementation, in a process of presenting the card set, each recommended object on the target card may also be presented on the recommended object presentation page through a predetermined trigger operation for the target card in the card set.

In some embodiments, the predetermined trigger operation for the target card in the card set may include a click operation and a long-press operation for the target card.

Specifically, when the predetermined trigger operation for any card in the card set is received, the card corresponding to the predetermined trigger operation is determined as the target card, and each recommended object on the target card is presented on the recommended object presentation page.

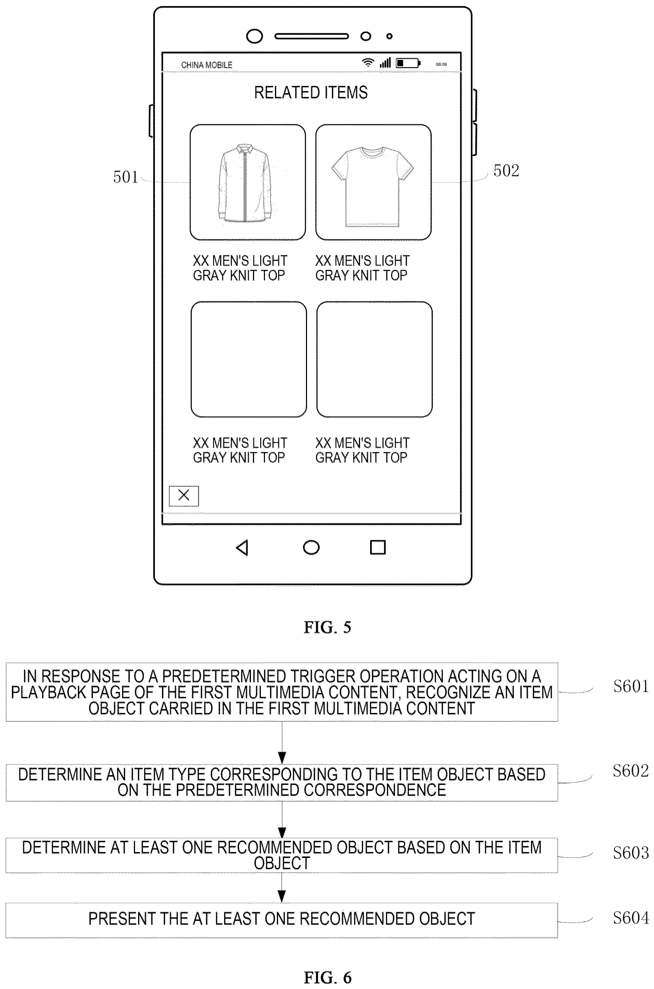

As shown in FIG. 4, when a predetermined trigger operation for the card 401 is received, the card 401 is determined as the target card, and the recommended objects on the target card 401 (such as a white long-sleeved jacket 501 and a white short-sleeved jacket 502) are presented on FIG. 5. FIG. 5 is a schematic diagram of a recommended object presentation page according to some embodiments of the present disclosure.

In some embodiments, in a process of presenting the card set in the stack style, respective cards in the card set may be presented in a scrolling manner through a predetermined sliding operation triggered for the card set. When a predetermined trigger operation for a target card in a card set is received, each recommended object on the target card is presented on a recommended object presentation page, which facilitates the user's extended consumption of content related to the currently presented multimedia content, thereby improving multimedia content viewing experience of the user.

In practice, the target resource objects recognized from the first multimedia content may include resource objects of the first resource type. In some embodiments, the first resource type may include, for example, an item type, etc.

On the basis of the above embodiments, the embodiments of the present disclosure provide a specific method for determining at least one recommended object for a resource object of a first resource type. Referring to FIG. 6, it is a flowchart of another method for processing multimedia content according to embodiments of the present disclosure. The method includes:

At S601, in response to a predetermined trigger operation acting on a playback page of the first multimedia content, an item object carried in the first multimedia content is recognized.

In some embodiments, the recognized item objects of the item type carried in the first multimedia content may include one or more item objects including, for example, hoodies, pants, tables, bags, or the like.

In an optional implementation, when a predetermined trigger operation acting on a presentation page of the first multimedia content is received, a video frame in the first multimedia content is captured first, and then a subject recognition algorithm is called to screen out a video frame carrying a resource object of a first resource type.

In practical application, when capturing a video frame in the first multimedia content, the video frame in the first multimedia content may be captured at intervals of a predetermined number of frames, for example, the first multimedia content is captured at an interval of 10 frames. In addition, a video frame in the first multimedia content may also be captured based on a predetermined time interval, for example, the capturing of the first multimedia content is performed at an interval of 1 second. The method for capturing a video frame in the embodiments of the present disclosure is not limited.

For example, when a predetermined trigger operation acting on a presentation page of the first multimedia content is received, first, video frames in the first multimedia content are captured to obtain 10 video frames, and then subject recognition is separately performed on the 10 captured video frames. In some embodiments, two video frames carry resource objects of a first resource type, such as a white hoody and a short dress.

At S602, an item type corresponding to the item object is determined based on the predetermined correspondence.

At S603, at least one recommended object is determined based on the item object.

In some embodiments, the at least one recommended object is of a recommended object type corresponding to the item object.

Based on the item object, at least one recommended object with the same or similar features as the item object is determined. In some embodiments, the at least one recommended object is of the item type.

In some embodiments, after recognizing that the first multimedia content carries an item object, at least one recommended object with the same or similar feature as the item object may be determined based on each recognized item object. In some embodiments, the at least one recommended object are of the item type.

In an optional implementation, after recognizing that the first multimedia content carries an item object, a video frame carrying the item object may be sent to a picture similarity calculation model, and then at least one recommended object corresponding to the item object is determined based on the picture similarity calculation model.

In some embodiments, the picture similarity calculation model is used for matching an item object with a recommended object in a recommended object library, so as to screen out at least one recommended object with the same or similar feature as the item object.

For example, assuming that recognized object items are a hoody and a short dress respectively, video frames carrying a white hoody and short dress may be sent to the picture similarity calculation model, and based on the picture similarity calculation model, the hoody and short dress are respectively matched with items in an item library. In some embodiments, items with the same or similar features as the hoodies include a white long-sleeved hoody and a white short-sleeved hoody, and items with the same or similar features as the short dress include a white short dress and a purple short dress.

At S603, the at least one recommended object is presented.

In an optional implementation, in a process of presenting at least one recommended object, when a predetermined interaction operation for a target recommended object on the recommended object presentation page is received, a detail presentation page of the target recommended object may be jumped to from the recommended object presentation page, and a user may learn more introduction content about the target recommended object based on the detail display page. In some embodiments, the predetermined interaction operation for the target recommended object may include a click operation for the target recommended object.

In the method for processing multimedia content provided in the embodiments of the present disclosure, during the process of presenting the multimedia content, based on a target resource object carried in the multimedia content, a recommended object related to the target resource object is presented to a user. It can be seen that the embodiments of the present disclosure provide a user with an extended consumption path for content carried in the multimedia content, thereby improving the user experience.

In a practical application, background music may be included in the target resource objects recognized from the first multimedia content. In some embodiments, the recommended object type corresponding to background music may include a music type, etc.

On the basis of the above embodiments, the embodiments of the present disclosure provide a specific method for determining a recommended object based on background music. The method includes:

First, in response to a predetermined trigger operation acting on a presentation page of the first multimedia content, background music carried in the first multimedia content is recognized. Then, music recognition is performed on the background music to obtain a music recognition result. Then, based on the music recognition result, song resources corresponding to the background music are determined. Then, the at least one song resource is presented.

In an optional implementation, music recognition may be performed on background music by calling an audio fingerprint-based music retrieval algorithm, so as to obtain a music recognition result, and then a song resource corresponding to the background music is determined based on the music recognition result.

For example, assuming that the background music is a chorus segment of a certain song, song information of the chorus segment is recognized by calling the audio fingerprint-based music retrieval algorithm, for example, the song name is "music A", and then a song with the song name "music A" is searched from a song library as the song resource corresponding to the background music.

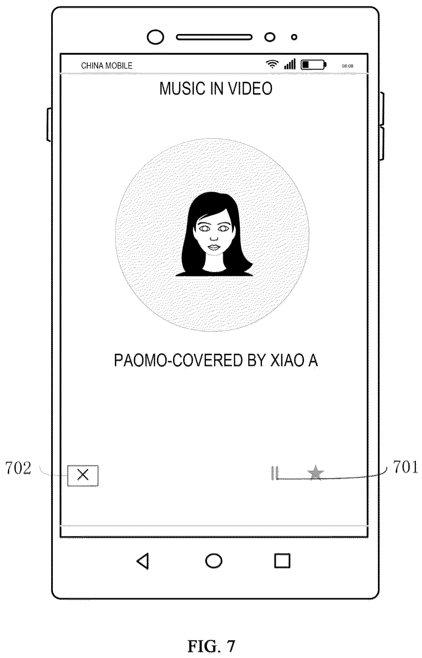

In practical applications, after the song resource corresponding to background music is determined, the song resource may also be presented on a recommended object presentation page. FIG. 7 is a schematic diagram of another recommended object presentation page according to embodiments of the present disclosure. In some embodiments, a music name, a music cover, author information, and the like corresponding to the song resource are presented on the recommended object presentation page.

In addition, the recommended object presentation page may be provided with a music playback control 701, and when a trigger operation for the music playback control is received, a song resource is played based on the recommended object presentation page.

In an optional implementation, a predetermined return control 702 may be further provided on the recommended object presentation page, and when a trigger operation for the predetermined return control is received, a function of exiting the recommended object presentation page may be implemented.

In some embodiments, in a case that at least one target resource object includes background music, first, music recognition is performed on the background music to obtain a music recognition result. Then, based on the music recognition result, a song resource corresponding to background music is determined and presented. It can be seen that the embodiments of the present disclosure provide a user with an extended consumption path for content carried in the multimedia content, thereby improving the user experience.

In practical applications, the target resource object recognized from the first multimedia content may include address information. In some embodiments, the recommended object type corresponding to the address information may include, for example, life service type, etc.

On the basis of the above embodiments, the embodiments of the present disclosure provide a method for determining a recommended object based on address information. Specifically, first, in response to a predetermined trigger operation acting on the presentation page of the first multimedia content, the address information carried in the first multimedia content is recognized, and at least one life service object are of the life service type within a predetermined distance range is determined by taking the address information as a centre, and the at least one life service object is presented.

In some embodiments, upon receiving a predetermined trigger operation acting on the presentation page of the first multimedia content, an audio file in the first multimedia content may be recognized by calling a speech recognition algorithm, so as to obtain address information carried in the first multimedia content. In some embodiments, the speech recognition algorithm may include a dynamic time warping-based algorithm, a deep learning neural network-based speech recognition algorithm, etc.

In an optional implementation, the subtitle content of the first multimedia content may also be recognized by calling a text recognition algorithm, so as to obtain the address information carried in the first multimedia content.

For example, it is assumed that the address information carried in the first multimedia content is "site ABC". By taking "site ABC" as a center, markets, supermarkets, clothing stores, tourist spots and the like are searched within 1 kilometer from the "site ABC".

In an optional implementation, if the first multimedia content carries a specific address anchor point, the location information corresponding to the address anchor point may be directly determined as the life service object corresponding to the address anchor point.

In some embodiments, in a case that address information is included in at least one target resource object, first, in response to a predetermined trigger operation acting on a playback page of the first multimedia content, address information carried in the first multimedia content is recognized; then, at least one life service object belonging to a life service type is determined within a predetermined distance range which taking the address information as a center. The embodiments of the present disclosure provide a user with an extended consumption path for content carried in multimedia content, thus, user experience is improved.

In a practical application, the target resource object recognized from the first multimedia content may include a target human face displayed on a video frame. In some embodiments, the recommended object type corresponding to the target human face displayed on the video frame may include a user account type.

On the basis of the above embodiments, the embodiments of the present disclosure provide a method for determining the recommended object based on a target human face displayed on a video frame. Specifically, in a case in which the user to whom the target human face belongs authorizes use of the target human face information, first, in response to the predetermined trigger operation acting on the playback page of the first multimedia content, a target human face carried in the first multimedia content is recognized, and then based on the target human face displayed on the video frame, at least one user account with a user avatar having a similarity with the target human face reaching a predetermined threshold is determined. In some embodiments, the user account is of a user account type.

In an optional implementation, when a predetermined trigger operation acting on a playback page of the first multimedia content is received, a video frame in the first multimedia content is captured first, and then a face recognition algorithm is called to recognize each video frame in the first multimedia content, so as to recognize a video frame carrying a target human face in the first multimedia content.

In an optional implementation, after recognizing that the first multimedia content carries the video frame of the target human face, in the case where a user to whom a target human face belongs authorizes the use of target human face information, a video frame carrying the target human face is sent to a human face matching service end, so as to determine, based on the human face matching service end, at least one user account with a user avatar having a similarity with the target human face reaching a predetermined threshold.

In some embodiments, the predetermined threshold may be determined based on actual needs, for example, it may be set to 80%, 85%, 90%, 95%, and so on.

For example, assuming that a face recognition algorithm is called, and a recognized human target faces are a human face A and a human face B, video frames carrying the human face A and the human face B may be sent to the human face matching service end, and based on the human face matching service end, user avatar having a similarity with the human face A and the human face B reaching a predetermined threshold value are respectively searched from a user avatar library. In some embodiments, a user account corresponding to the user avatar having a similarity with the human face A reaching a predetermined threshold is "a small A", and a user account corresponding to the user avatar having a similarity with the human face B reaching a predetermined threshold is "a small B".

In an optional implementation, assuming that the first multimedia content is a first video, and a text recognition algorithm may also be called, the subtitle content of the first video is recognized to obtain a character name carried in the first video, and then based on the character name, a user nickname having a similarity with the character name reaching a predetermined threshold is searched, and a user account corresponding to the searched user nickname is determined as a recommended object corresponding to the target resource object. For example, when text recognition is performed on the subtitle content of the first video, a character name obtained is "Flower", and then a user nickname having a similarity with "Flower" reaching a predetermined threshold is searched, such as " Teacher Flower" and "Flower, the store manager".

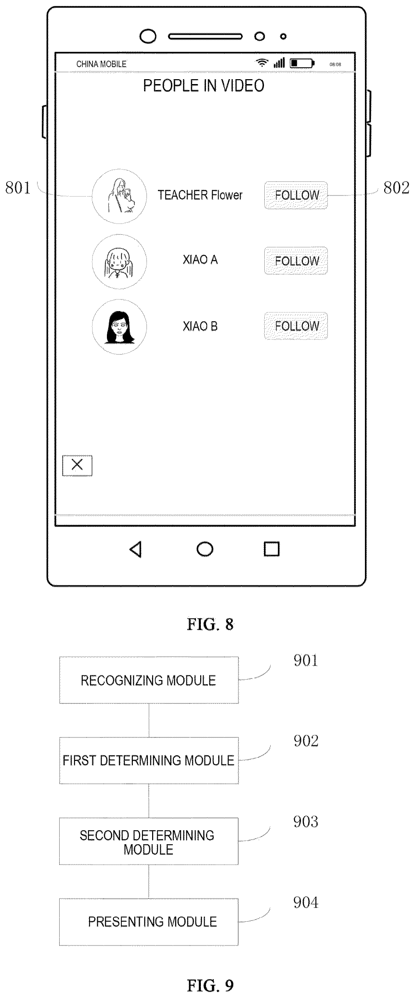

In some embodiments, after at least one user account with a user avatar having a similarity with the target human face reaching a predetermined threshold is determined, in a case in which a user to whom the user account belongs authorizes to present the user account, the user account may further be displayed on the recommended object presentation page. As shown in FIG. 8, it illustrates another recommended object presentation page according to embodiments of the present disclosure.

In an optional implementation, at least one user account presented on the recommended object presentation page is respectively provided with a predetermined interaction control, and in response to a trigger operation for the predetermined interaction control corresponding to the first user account in the at least one user account, a predetermined interaction relationship between a current user account and the first user account is established.

In some embodiments, the trigger operation for the predetermined interaction control corresponding to the first user account in the at least one user account may include a click operation and a long-press operation for the predetermined interaction control, which is not limited in the embodiments of the present disclosure. In some embodiments, the first user account may be any one of the at least one user account.

In some embodiments, the predetermined interaction relationship between the current user account and the first user account may include determining the first user account as an object followed by the current user account.

As shown in FIG. 8, when a trigger operation for a predetermined interaction control 802 corresponding to the first user account 801 is received, the first user account 801 is determined as an object followed by the current user account, thereby implementing a function of establishing a predetermined interaction relationship between the current user account and the first user account.

In some embodiments, in a case where at least one target resource object includes a target human face, first, in response to a predetermined trigger operation acting on a playback page of first multimedia content, a target human face carried in the first multimedia content is recognized, and then, based on the target human face, at least one user account with a user avatar having a similarity with the target human face reaching a predetermined threshold is determined and presented. It can be seen that the embodiments of the present disclosure provide a user with an extended consumption path for carrying content in multimedia content, thereby improving the user experience.

Based on the above method embodiments, the present disclosure further provides an apparatus for processing multimedia content. Reference is made to FIG. 9, which shows a schematic structural diagram of an apparatus for processing multimedia content according to embodiments of the present disclosure. The apparatus includes:
a recognizing module 901 configured to recognize, in response to a predetermined trigger operation acting on a presentation page of first multimedia content, at least one target resource object carried in the first multimedia content, where there is a predetermined correlation between the target resource object and a recommended object type;
a first determining module 902 configured to determine, based on the predetermined correspondence, a recommended object type corresponding to a first target resource object in the at least one target resource object;
a second determining module 903 configured to determine at least one recommended object based on the first target resource object, where the at least one recommended object is of the recommended object type corresponding to the first target resource object; and
a presenting module 904 configured to present the at least one recommended object.

In an optional embodiment, the presenting module includes:
a categorization presenting submodule configured to categorize and present recommended objects determined respectively based on the first target resource object and the second resource object, according to the recommended object type.

In an optional embodiment, the categorization presenting submodule includes:
a first determining submodule configured to present, on a first card, at least one first recommended object determined based on the first target resource object, where the first recommended object is of the recommended object type corresponding to the first target resource object;
a second determining submodule configured to present at least one second recommended object determined based on the second resource object on a second card, where the second recommended object is of a recommended object type corresponding to the second target resource object, and the first card and the second card belong to a card set presented in a stack style.

In an optional implementation, the categorization presenting submodule further includes:
a scrolling presenting submodule configured to present respective cards in the card set in a scrolling manner in response to a predetermined sliding operation triggered for the card set.

In an optional implementation, the categorization presenting submodule further includes:
a recommended object presenting submodule configured to present, on a recommended object presentation page, a recommended object on the target card, in response to a predetermined trigger operation for the target card in the card set;
a receiving submodule configured to receive a predetermined interaction operation for a target recommended object on the recommended object presentation page.

In an optional implementation, the at least one target resource object includes an item object, and a recommended object type corresponding to the item object includes an item type. The second determining module includes:
a third determining submodule configured to determine at least one recommended item with the same or similar feature as the item object, where the recommended item is of the item type.

In an optional implementation, the at least one target resource object includes background music, and a recommended object type corresponding to the background music includes a music type. The second determining module includes:
a music recognition submodule configured to perform music recognition on the background music to obtain a music recognition result;
a fourth determining submodule configured to determine a song resource corresponding to the background music based on the music recognition result, where the song resource is of the music type.

In an optional implementation, the at least one target resource object includes address information, and a recommended object type corresponding to the address information includes a life service type. The second determining module includes:
a fifth determining submodule configured to determine at least one life service object within a predetermined distance range by taking the address information as a center, where the life service object is of the life service type.

In an optional implementation, the at least one target resource object includes a target human face displayed on a video frame, and recommended object type corresponding to the target human face includes a user account type. The second determining module includes:
a sixth determining submodule configured to determine, based on the target human face displayed on the video frame, at least one user account with a user avatar having a similarity with the target human face reaching a predetermined threshold, where the user account is of the user account type.

In an optional embodiment, the recognition module includes:
a frame presenting submodule configured to present, in response to the predetermined trigger operation acting on a presentation page of the first multimedia content, a plurality of key video frames in the first multimedia content on a video recognition page in a form of transition dynamic effect; and
a target resource object recognizing submodule configured to recognize the at least one target resource object carried in the first multimedia content based on the plurality of key video frames.

In the apparatus for processing multimedia content provided in the embodiments of the present disclosure, first, in response to a predetermined trigger operation acting on a presentation page of first multimedia content, at least one target resource object carried in the first multimedia content is recognized, where there is predetermined correspondence between the target resource object and a recommended object type; then, a recommended object type corresponding to a first target resource object in the at least one target resource object is determined based on the predetermined correspondence; at least one recommended object is determined based on the first target resource object; then the at least one recommended object is presented. According to the embodiments of the present disclosure, in a process of presenting a multimedia content, based on a target resource object carried in the multimedia content, a recommended object related to the target resource object may be presented to a user. It can be seen that the embodiments of the present disclosure provide a user with an extended consumption path for carrying content in the multimedia content, thereby improving the user experience.

In addition to the described method and apparatus, the embodiments of the present disclosure further provide a computer readable storage medium. The computer readable storage medium stores instructions therein, and when running on a terminal device, the instruction causes the terminal device to implement the method for processing multimedia content described in the embodiments of the present disclosure.

Embodiments of the present disclosure further provides a computer program product. The computer program product includes a computer program/instruction. When executed by a processor, the computer program/instruction implements the method for processing multimedia content according to the embodiments of the present disclosure.

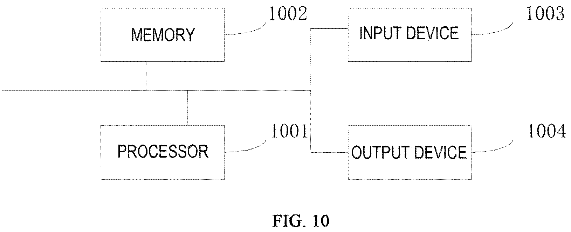

In addition, embodiments of the present disclosure further provides a device for processing multimedia content. As shown in FIG. 10, the device for processing multimedia content may include: a processor 1001, a memory 1002, an input device 1003, and an output device 1004. The number of processors 1001 in the device for processing multimedia content may be one or more, and one processor is shown as an example in FIG. 10. In some embodiments of the present disclosure, the processor 1001, the memory 1002, the input device 1003, and the output device 1004 may be connected by a bus or in another manner, and the bus connection is taken as an example in FIG. 10.

The memory 1002 may be configured to store software programs and modules, and the processor 1001 executes various functional applications and data processing of the device for processing multimedia content by running the software programs and modules stored in the memory 1002. The memory 1002 may mainly include a program storage area and a data storage area, where the program storage area may store an operating system, an application program required by at least one function, and the like. In addition, the memory 1002 may include a high-speed random-access memory, and can further include a non-volatile memory, for example, at least one magnetic disk storage device, a flash memory device, or another volatile solid-state storage device. The input device 1003 may be used to receive input numeral or character information and generate a signal input related to user setting and function control of the multimedia content processing device.

Specifically, in this embodiment, the processor 1001 may load, according to the following instruction, an executable file corresponding to the process of one or more application programs to the memory 1002, and the processor 1001 runs the application programs stored in the memory 1002, thereby implementing various functions of the foregoing device for processing multimedia content.

It should be noted that, in this description, terms such as "first" and "second" are merely used to distinguish one entity or operation from another entity or operation, and do not necessarily require or imply any actual relationship or sequence between these entities or operations. Furthermore, the terms "comprise", "include", or any other variant thereof are intended to cover a non-exclusive inclusion, so that a process, a method, an article, or a device that includes a series of elements not only includes those elements, but also includes other elements that are not explicitly listed, or further includes elements inherent to the process, the method, the article, or the device. An element limited by statement "including a... " does not exclude other same elements existing in a process, a method, an article, or a device that includes the element, unless otherwise specified.

The foregoing descriptions are merely specific implementations of the present disclosure, so that those skilled in the art can understand or implement the present disclosure. Various modifications to these embodiments will be readily apparent to those skilled in the art, and the general principles defined herein may be implemented in other embodiments without departing from the spirit or scope of the present disclosure. Therefore, the present disclosure will not be limited to the embodiments described herein but will be subject to the broadest scope consistent with the principles and novel features disclosed herein.

## Claims

1. A method for processing multimedia content, **characterized in that** the method comprises:
in response to a predetermined trigger operation acting on a presentation page of first multimedia content, recognizing at least one target resource object carried in the first multimedia content, wherein there is predetermined correspondence between the target resource object and a recommended object type;
determining, based on the predetermined correspondence, a recommended object type corresponding to a first target resource object in the at least one target resource object;
determining at least one recommended object based on the first target resource object, wherein the at least one recommended object is of the recommended object type corresponding to the first target resource object; and
presenting the at least one recommended object.

2. The method according to claim 1, **characterized in that**, the at least one target resource object further comprises a second target resource object, and presenting the at least one recommended object comprises:
according to the recommended object type, categorizing and presenting recommended objects that are determined respectively based on the first target resource object and the second resource object.

3. The method according to claim 2, **characterized in that**, according to the recommended object type, categorizing and presenting the recommended objects that are determined respectively based on the first target resource object and the second resource object comprises:
presenting, on a first card, at least one first recommended object determined based on the first target resource object, wherein the first recommended object is of the recommended object type corresponding to the first target resource object; and
presenting at least one second recommended object determined based on the second resource object on a second card, wherein the second recommended object is of a recommended object type corresponding to the second target resource object, and the first card and the second card belong to a card set presented in a stack style.

4. The method according to claim 3, **characterized in that**, the method further comprises:
in response to a predetermined sliding operation triggered for the card set, presenting respective cards in the card set in a scrolling manner.

5. The method according to claim 3 or 4, **characterized in that**, the method further comprises:
in response to a predetermined trigger operation for a target card in the card set, presenting, on a recommended object presentation page, a recommended object on the target card; and
receiving a predetermined interaction operation for a target recommended object on the recommended object presentation page.

6. The method according to claim 1, **characterized in that**, the at least one target resource object comprises an item object, and a recommended object type corresponding to the item object comprises an item type, and determining the at least one recommended object based on the first target resource object comprises:
determining at least one recommended item with the same or similar feature as the item object, wherein the recommended item is of the item type.

7. The method according to claim 1, **characterized in that**, the at least one target resource object comprises background music, and a recommended object type corresponding to the background music comprises a music type, and determining the at least one recommended object based on the first target resource object comprises:
performing music recognition on the background music to obtain a music recognition result; and
determining a song resource corresponding to the background music based on the music recognition result, wherein the song resource is of the music type.

8. The method according to claim 1, **characterized in that**, the at least one target resource object comprises address information, and a recommended object type corresponding to the address information comprises a life service type, and determining the at least one recommended object based on the first target resource object comprises:
determining at least one life service object within a predetermined distance range by taking the address information as a center, wherein the life service object is of the life service type.

9. The method according to claim 1, **characterized in that**, the at least one target resource object comprises a target human face displayed on a video frame, and recommended object type corresponding to the target human face comprises a user account type, and determining the at least one recommended object based on the first target resource object comprises:
determining, based on the target human face displayed on the video frame, at least one user account with a user avatar having a similarity with the target human face reaching a predetermined threshold, wherein the user account is of the user account type.

10. The method according to claim 1, **characterized in that**, recognizing the at least one target resource object carried in the first multimedia content in response to the predetermined trigger operation acting on the presentation page of the first multimedia content comprises:
in response to the predetermined trigger operation acting on a presentation page of the first multimedia content, presenting a plurality of key video frames in the first multimedia content on a video recognition page in a form of transition dynamic effect; and
recognizing the at least one target resource object carried in the first multimedia content based on the plurality of key video frames.

11. An apparatus for processing multimedia content, **characterized in that**, the apparatus comprises:
a recognizing module configured to recognize, in response to a predetermined trigger operation acting on a presentation page of first multimedia content, at least one target resource object carried in the first multimedia content, wherein there is a predetermined correlation between the target resource object and a recommended object type;
a first determining module configured to determine, based on the predetermined correspondence, a recommended object type corresponding to a first target resource object in the at least one target resource object;
a second determining module configured to determine at least one recommended object based on the first target resource object, wherein the at least one recommended object is of the recommended object type corresponding to the first target resource object; and
a presenting module configured to present the at least one recommended object.

12. A computer readable storage medium, **characterized in that**, the computer readable storage medium stores instructions therein, and the instructions, when running on a terminal device, cause the terminal device to implement the method according to any of claims 1 to 10.

13. A device for processing multimedia content, **characterized by** comprising: a memory, a processor, and a computer program stored in the memory and being executable on the processor, wherein the processor, when executing the computer program, implements the method according to any of claims 1 to 10.
